# EUROPÄISCHE PATENTSCHRIFT

(11) **EP 3 485 728 B1**
(45) Veröffentlichungstag und Bekanntmachung des Hinweises auf die Patenterteilung: **21.12.2022**
(21) Anmeldenummer: 18401090.8
(22) Anmeldetag: 02.11.2018
(51) Int. Cl.: A01M 7/00

(54) **LANDWIRTSCHAFTLICHE VERTEILMASCHINE**
AGRICULTURAL DISTRIBUTOR
MACHINE D'ÉPANDAGE AGRICOLE

(30) Priorität: 10.11.2017 DE 102017126351
(43) Veröffentlichungstag der Anmeldung: 22.05.2019
(73) Patentinhaber: Amazonen-Werke H. Dreyer SE & Co. KG, 49205 Hasbergen (DE)
(72) Erfinder: Austermann, Stefan, 48291 Telgte (DE); Kiefer, Stefan, 49074 Osnabrück (DE); Klemann, Timo, 49191 Belm (DE); Heer, Jochen, 49074 Osnabrück (DE)

(56) Entgegenhaltungen:
- EP-A1- 2 957 346
- WO-A1-2014/067785
- DE-U1- 29 908 919
- GB-A- 2 337 984
- US-A1- 2016 175 869

## Beschreibung

Die Erfindung betrifft eine landwirtschaftliche Verteilmaschine gemäß dem Oberbegriff des Patentanspruches 1.

Eine derartige landwirtschaftliche Verteilmaschine ist in US 2016/0175869 A1 offenbart.

Eine weitere derartige Verteilmaschine ist in EP 2 957 346 A1 beschrieben und weist zumindest einen Düsenkörper auf, welcher an einem Verteilergestänge der Verteilmaschine angeordnet ist.

Der Düsenkörper ist an dem Verteilergestänge der Verteilmaschine in gleichmäßigen Abständen vorgesehen und soll genutzt werden, um Flüssigkeiten, wie Dünger, Insektizide, Herbizide oder Wasser, in vorbestimmten Mengen auszubringen.

In der Vergangenheit war es üblich, solche Düsenkörper mit pneumatischen oder elektrischen Ventilen zu verbinden und mit mehreren Düsen zu versehen. Die verschiedenen Düsen konnten bisher manuell oder fernbedient gewechselt werden, um in Abstimmung mit dem verbundenen Ventil und anderen Einstellparametern die Ausbringcharakteristik, d.h. bspw. die Ausbringmenge, das Tröpfchenspektrum, die Querverteilung etc., zu variieren.

Die EP 2 957 346 A1 sieht zur Variation der Ausbringcharakteristik vor, den oben genannten Düsenkörper mit zwei Düsen zu versehen, wobei beide Düsen mit jeweils einem eigenen Ventil verbunden sind. Das Besondere ist hierbei, dass diese Ventile auf die Durchflussmenge bezogen proportional betreibbar sind. Im Speziellen handelt es sich um schnell schaltende Ventile, worüber sich anhand des Verhältnisses aus Öffnungsdauer und Schließdauer pro Zeiteinheit der Ventile bspw. die Durchflussmenge variieren lässt. Anders als bisher bekannt, lässt sich hier die Ausbringmenge nahezu unmittelbar und zumindest annährend kontinuierlich steuern ohne einen Wechsel der Düsen vornehmen zu müssen. Der Nachteil ist allerdings, dass solche Proportionalventile und insbesondere schnell schaltende Ventile in der Herstellung sehr aufwendig und damit teuer in der Anschaffung sind.

Der Erfindung liegt daher die Aufgabe zugrunde eine vereinfachte Düsenanordnung zur zumindest annährend kontinuierlichen Steuerung der Ausbringmenge zu schaffen.

Diese Aufgabe wird erfindungsgemäß durch eine landwirtschaftliche Verteilmaschine mit den Merkmalen des Anspruchs 1 gelöst. Es ist vorgesehen, dass zumindest ein Ventil kontinuierlich öffnend bzw. schließend betreibbar ist, und dass die erste Düse mit dem ersten Ventil und die zweite Düse mit dem zweiten Ventil verbindbar ist. Infolge dieser Maßnahme wird erreicht, dass das erste von zwei Ventilen wesentlich einfacher gestaltet und somit auch günstiger in der Anschaffung ist. Eine individuelle Mengenanpassung kann dennoch vorgenommen werden über das jeweilige auf die Durchflussmenge bezogen proportional bettreibbare, zweite Ventil. Eine solche Ausgestaltung profitiert folglich von einer Trennung der Aufgaben zwischen den beiden verschiedenartigen Ventilen. Während sich über das vergleichsweise einfach ausgeführte kontinuierlich öffnend bzw. schließend bettreibbare Ventil die Ausbringung einer Grundmenge an- bzw. abschalten und über das Druckniveau variieren lässt, kann die Ausbringmenge in einem gewissen Rahmen annährend kontinuierlich angepasst werden durch das zweite Proportionalventil. Die so geartete Düsenanordnung zeichnet sich durch die Möglichkeit zur besonders bedarfsorientierten Ausbringung aus: über die Variation des Druckniveaus ist die Düsenanordnung dazu eingerichtet auf große Durchflussmengenänderungen zu reagieren, während mittels des zweiten Ventils besonders schnelle Änderungen der Durchflussmenge realisiert werden können. Natürlich ist es auch denkbar, dass das Proportionalventil betrieben wird, während das andere Ventil geschlossen ist. Der Einstellbereich der so gearteten Düsenanordnung ergibt sich somit aus den Anpassungsbereichen jedes der beiden Ventile für sich genommen oder in Addition. Als Proportionalventil bzw. auf die Durchflussmenge bezogen proportional betreibbares Ventil ist hierbei jedes Ventil denkbar, welches eine dynamische Anpassung der Durchflussmenge über die Zeit erlaubt. Die im Stand der Technik beschriebene Düsenanordnung nutzt hierzu bspw. schnell schaltende Ventile.

Die erfindungsgemäße Ausführungsform sieht vor, dass die erste und zweite Düse der Düsenanordnung räumlich zumindest annährend unmittelbar aneinandergrenzend am Verteilergestänge angeordnet sindln dieser Ausführungsform sind die beiden Düsen in einem einzigen Düsenkörper zusammengefasst. Auf diese Weise ist eine Hybriddüse realisiert, die wie gewohnt an- bzw. abgeschaltet werden kann, um eine Grundmenge auszubringen, deren Ausbringmenge in Maßen zumindest annährend kontinuierlich über das Druckniveau gesteuert wird, und/oder die eine Grundmenge ausbringt und zeitgleich eine zumindest annährend kontinuierliche, schnelle Mengenanpassung erlaubt. Die so geartete Düsenanordnung weist, in regelmäßigen Abständen am gesamten Verteilergestänge der Verteilmaschine angeordnet, alle Vorteile bereits bekannter Anordnungen auf und ist zudem günstiger in der Herstellung.

In einer alternativen nicht erfindungsgemäßen Ausführungsform ist vorgesehen, dass die erste und zweite Düse der Düsenanordnung in Fahrtrichtung des Verteilergestänges beabstandet nebeneinander angeordnet sind. In vorteilhafter Weise lassen sich so die Gesamtanzahlen der, zur Bestückung des gesamten Verteilergestänges der Verteilmaschine benötigten, Ventile und Düsen reduzieren, indem gleichartige Düsen, mit ihrem Ventil verbunden, so angeordnet werden, dass ihre Sprühfächer aneinandergrenzen oder sich leicht überlappen. So wird sichergestellt, dass die gesamte Arbeitsbreite von der ersten Düse mit ihrem verbundenen Ventil bearbeitet wird. Wird die so geartete Ausbringung mit zwischen den gleichartigen, ersten Düsen ähnlich beabstandet angeordneten zweiten Düsen überlagert, so zeigt die Düsenanordnung ebenfalls die zuvor beschriebenen Vorteile und weist eine reduzierte Anzahl benötigter Komponenten auf.

Erfindungsgemäß ist die zweite Düse mit dem ersten Ventil verbindbar. Diese Weiterbildung erlaubt es in vorteilhafter Weise, dass auch die zweite Düse mit dem kontinuierlich öffnend bzw. schließend betreibbaren Ventil verbindbar ist, so dass diese zweite Düse ebenfalls zu Ausbringung der

Grundmenge genutzt wird. Dies ist besonders günstig in Ausbringsituationen, in denen keine Anpassung der Durchflussmenge über die Zeit notwendig ist. Zudem können die Düsen bei bekannter Anordnung zueinander insgesamt für geringere Durchflussmengen ausgelegt werden und somit günstiger beschafft werden, da sich die Ausbringmenge auf eine größere Anzahl an Düsen verteilen lässt.

In einer vorteilhaften Weiterbildung der Erfindung ist vorgesehen, dass die Düsenanordnung zumindest eine weitere Düse umfasst, und dass die erste Düse mit dem ersten Ventil und die zweite und/oder zumindest eine weitere Düse mit dem zweiten Ventil verbindbar sind. Durch eine zusätzliche Düse ist bei ausreichender Auslegung der weiteren Komponenten eine Erhöhung der Ausbringmenge in einfacher Weise realisierbar. Zudem kann die Düse, je nach Ausführungsform der Erfindung entsprechend passend angeordnet, zur Vergleichmäßigung des Austrages genutzt werden, da sich durch eine erhöhte Anzahl der Düsen der Abstand zwischen den Düsen reduzieren lässt. Des Weiteren ist es denkbar, die zusätzliche Düse als Alternative der zweiten Düse zu nutzen. Die beiden Düsen könnten sich zweckmäßig unterscheiden in Eigenschaften wie:
- Öffnungswinkel des sich ausbildenden Sprühfächers,
- Anpassungsbereich der Durchflussmenge,
- erzeugtes Tröpfchenspektrum, etc.

Infolge dieser Maßnahme ist die Düsenanordnung für eine vergrößerte Anzahl von Anwendungsfällen geeignet.

In einer besonders vorteilhaften Weiterbildung der Erfindung ist zumindest eine weitere Düse mit dem ersten Ventil verbindbar, wobei die Düsen unterschiedliche Größen haben. In vorteilhafter Weise wird die Liste der unterschiedlichen Düseneigenschaften um die Größe der Düsen erweitert und zusätzlich die Möglichkeit geschaffen zumindest eine zusätzliche Düse mit dem ersten Ventil zu verbinden. Auf Grund dieser Maßnahme ist die Düsenanordnung noch vielseitiger einsetzbar, wobei sich die beiden zuletzt beschriebenen Weiterbildungen in vorteilhafter Weise durch eine gleichbleibende Ventilanzahl realisieren lassen, so dass die wesentlich gesteigerte Funktionalität nur in geringem Maße mit steigenden Kosten zur Herstellung der Vorrichtung einhergeht.

In einer möglichen Weiterbildung der Erfindung sind dem ersten und dem zweiten Ventil separate Spritzleitungen zugeordnet. In vorteilhafter Weise ist so die Möglichkeit geschaffen, die unterschiedlichen Ventile mit verschiedenen Vorratstanks zu verbinden und so über die verschiedenen Düsen der Düsenanordnung unterschiedliche Flüssigkeiten auszubringen. Im Anwendungsfall kann dies genutzt werden um beispielsweise ein Grundschutzmittel flächendeckend auszubringen und gezielt um ein weiteres Mittel zu ergänzen. Hierbei wäre der Tank, der das Grundschutzmittel bevorratet, mit den ersten Ventilen verbunden und der weitere Tank mit dem Zusatzmittel befüllt und mit den zweiten Ventilen verbunden.

Weitere Einzelheiten der Erfindung sind der Beispielsbeschreibung und den Zeichnungen zu entnehmen. Die Zeichnungen zeigen
- Fig.1: ein Fließschema einer erfindungsgemäßen Düsenanordnung,
- Fig.2: ein Fließschema einer Variante A der erfindungsgemäßen Düsenanordnung,
- Fig.3: Anordnung der Düsenanordnung nach Variante A an einer Hälfte eines Verteilergestänges in schematischer Darstellung,
- Fig.4: ein Fließschema einer nicht erfindungsgemäßen Variante B der Düsenanordnung,
- Fig.5: Anordnung der Düsenanordnung nach nicht erfindungsgemäßer Variante B an einer Hälfte eines Verteilergestänges in schematischer Darstellung,
- Fig.6: ein Fließschema einer Variante C der erfindungsgemäßen Düsenanordnung,
- Fig.7: ein Fließschema einer Variante D der erfindungsgemäßen Düsenanordnung,
- Fig.8: ein Fließschema einer Variante E der erfindungsgemäßen Düsenanordnung,
- Fig.9: ein Fließschema einer Variante der erfindungsgemäßen Düsenanordnung mit separaten Spritzleitungen.

Eine nicht dargestellte landwirtschaftliche Verteilmaschine ist mit einem Verteilergestänge und zumindest einem Vorratstank ausgerüstet. Das Verteilergestänge setzt sich in der Regel aus zwei symmetrischen Gestängehälften zusammen. An jeder der Gestängehälften ist eine Mehrzahl von Düsenanordnungen 1 vorgesehen. Die Düsenanordnungen 1 werden über Leitungen und Ventile 4, 5 mit dem Vorratstank verbunden und können mehrere Düsen 2, 3 umfassen. Die Ventile 4, 5 sind auf unterschiedliche Weisen betreibbar, wodurch sich die Ausbringcharakteristik der mit ihnen verbundenen Düsen 2, 3 beeinflussen lässt. Da eine solche gattungsgemäße Verteilmaschine dem Fachmann geläufig ist, wird auf eine detailliertere Beschreibung weiterer Komponenten an dieser Stelle verzichtet. Die so beschaffene landwirtschaftliche Verteilmaschine kann genutzt werden, um Flüssigkeiten, wie Dünger, Insektizide, Herbizide oder Wasser, in vorbestimmten Mengen und flächendeckend und/oder gezielt auszubringen.

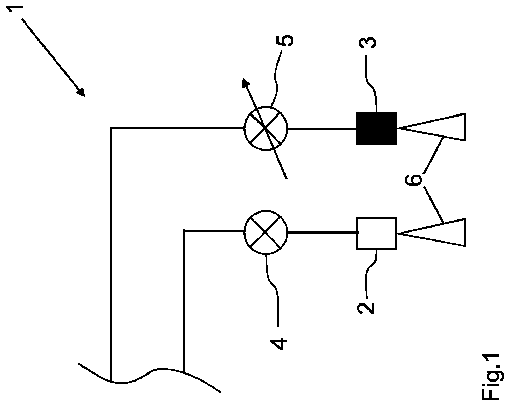

Ein Fließschema einer erfindungsgemäßen Ausführungsform einer Düsenanordnung 1 ist in Fig.1 dargestellt. Die Düsenanordnung 1 umfasst eine erste Düse 2 und eine zweite Düse 3, welche in hier nicht näher dargestellter Weise mit einem Vorratstank der Verteilmaschine verbunden sind. Die erste Düse 2 ist mit einem ersten Ventil 4 und die zweite Düse 3 mit einem zweiten Ventil 5 verbunden. Das Besondere der in Fig.1 gezeigten Düsenanordnung 1 ist, dass das erste Ventil 4 kontinuierlich öffnend bzw. schließend betreibbar ist, während das zweite Ventil 5 auf die Durchflussmenge bezogen proportional betreibbar ist. Das erste Ventil 4 verfügt also über zwei Schaltstellungen: offen oder geschlossen. Als zweites Ventil 5 ist jedes bereits im Stand der Technik bekannte Ventil denkbar welches eine dynamische Anpassung der Durchflussmenge über die Zeit erlaubt.

Für den Betrieb der Düsenanordnung 1 ist diese mit einem nicht dargestellten Vorratstank verbunden und über eine ebenfalls nicht dargestellte Pumpe mit Druck beaufschlagt. Wird das erste Ventil 4 durch nicht dargestellte, geeignete Mittel in den geöffneten Zustand versetzt, führt dies dazu dass die erste Düse 2 mit der mit Druck beaufschlagten Flüssigkeit aus dem Vorratstank versorgt wird und sich ein Sprühfächer 6 unter der ersten Düse 2 ausbildet. Wird das erste Ventil 4 durch die geeigneten Mittel in den geschlossenen Zustand versetzt ist die Verbindung zwischen dem Tank und der ersten Düse 2 unterbrochen, so dass keine Flüssigkeit mehr ausgebracht wird. Die Durchflussmenge der ersten Düse 2 wird erfindungsgemäß nicht über das verbundene erste Ventil 4 beeinflusst sondern über das Druckniveau, welches sich im System einstellt, geregelt. Das zweite Ventil 5 hingegen ist auf die Durchflussmenge bezogen proportional betreibbar. Das heißt die Durchflussmenge der zweiten Düse 3 wird nicht nur vom Druckniveau, welches in dem System herrscht, beeinflusst, sondern lässt sich vor allem durch das zweite Ventil 5 steuern. Im Anwendungsfall lässt sich über die erste Düse 2 und das erste Ventil 4 eine vom Druckniveau abhängige Grundmenge an Spritzflüssigkeit ausbringen während die zweite Düse 3 mit dem zweiten Ventil 5 zur variablen Steuerung einer zusätzlichen Ausbringmenge geeignet ist.

Diese Ausführungsform der Düsenanordnung 1, die in Fig.1 gezeigt ist, hat den Vorteil, dass das erste Ventil 4 vergleichsweise einfach aufgebaut und somit kostengünstig ist. Zur variablen und nahezu kontinuierlichen, schnellen Steuerung der Durchflussmenge ist die Düsenanordnung 1 mit dem auf die Durchflussmenge bezogen proportional betreibbaren, zweiten Ventil 5 versehen. Die Vorrichtung ist somit dazu eingerichtet einem Benutzer der landwirtschaftlichen Verteilmaschine mittels der geeigneten Mittel den gleichmäßigen Austrag einer Grundmenge zu ermöglichen und diesen mit einer variabel steuerbaren Durchflussmenge zu ergänzen.

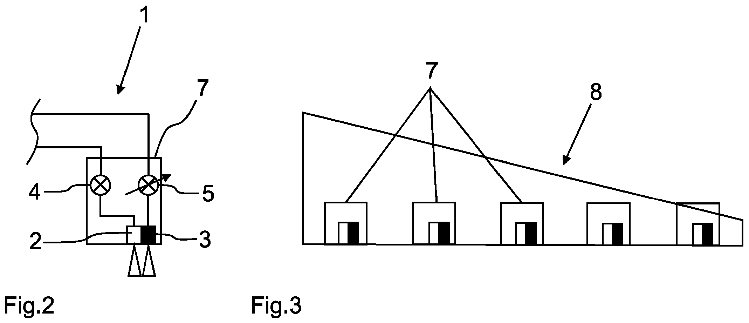

In Fig.2 ist das Fließschema einer Variante A der erfindungsgemäßen Düsenanordnung 1 gezeigt, welche in ebenfalls nicht dargestellter Weise mit dem Vorratstank der Verteilmaschine verbunden ist. Die Ausführungsform der Erfindung nach Variante A zeichnet sich dadurch aus, dass die erste Düse 2 und zweite Düse 3 der Düsenanordnung 1 räumlich zumindest annährend unmittelbar aneinandergrenzend an einem Verteilergestänge angeordnet sind, wie in Fig.3 zu sehen ist. Diese Variante A hat den Vorteil, dass die beiden Düsen 2, 3 mit ihren zugeordneten Ventilen 4, 5, wobei die Ventile 4, 5 ausgeführt sind, wie in der zuvor beschriebenen Ausführungsform, in einem einzigen Düsenkörper 7 zusammengefasst sind. Dieser Düsenkörper 7 bildet eine Hybriddüse, die sowohl zum Austrag der druckabhängingen Grundmenge als auch zur variablen Steuerung der Durchflussmenge eingerichtet ist. Werden die beiden Ventile 4, 5 zeitgleich betrieben, so ergibt sich die Gesamtausbringmenge pro Düsenkörper 7 aus der Addition der einzelnen Durchflussmengen pro Ventil 4, 5. Ebenso denkbar ist, dass nur eines der Ventile 4, 5 betrieben wird während das andere geschlossen ist, so dass sich die Gesamtausbringmenge durch die Durchflussmenge des betriebenen Ventils 4 oder 5 ergibt.

Um Flüssigkeiten flächendeckend mittels Variante A der Düsenanordnung 1 auszubringen, ist es notwendig ein Verteilergestänge mit einer Mehrzahl von Düsenanordnungen 1 zu versehen. In Fig. 3 ist eine Verteilergestängehälfte 8 mit beabstandet zueinander angeordneten Düsenkörpern 7 schematisch gezeigt. Die Düsenkörper 7 verfügen, wie eben beschrieben, jeweils über zwei unterschiedlich betreibbare Düsen 2, 3 mit ihren Ventilen 4, 5 und sind in gleichmäßigen Abständen über die gesamte Breite der Verteilergestängehälfte 8 angeordnet. Die Funktionsweise eines einzelnen Düsenkörpers 7 überträgt sich somit auf die gesamte Verteilergestängehälfte 8 bzw. auf die gesamte Verteilmaschine.

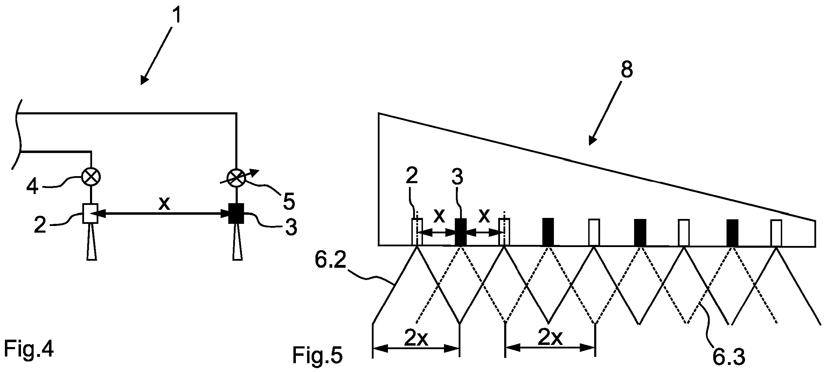

Das Fließschema einer nicht erfindungsgemäßen Variante B der Düsenanordnung 1 ist in Fig.4 gezeigt. Die Ausführungsform der Erfindung nach Variante B zeichnet sich dadurch aus, dass die erste Düse 2 und die zweite Düse 3 der Düsenanordnung 1 in Fahrtrichtung des Verteilergestänges beabstandet nebeneinander angeordnet sind, wie in Fig.5 zu sehen. Die Düsen 2, 3 weisen einen Abstand X zueinander auf, wie in Fig.4, 5 gezeigt.

In Fig.5 ist eine Verteilergestängehälfte 8 gezeigt, die mit Düsenanordnungen 1 nach Variante B bestückt ist, wobei für jede Düse 2, 3 schematisch der sich ausbildende Sprühfächer 6.2, 6.3 angedeutet ist. Der Abstand zwischen den Düsen 2, 3 beträgt jeweils X. Der Abstand zwischen zwei Düsenanordnungen 1 beträgt ebenfalls X, so dass Düsen 2, 3 mit gleichartig betriebenen Ventilen 4 bzw. 5 einen Abstand von 2X aufweisen. Um eine annährend flächendeckende Ausbringung und eine vorteilhafte Überdeckung zu gewährleisten, sind die Düsen 2, 3 in dieser Ausführungsform nach Variante B so ausgeführt, dass die Öffnungsweite der Sprühfächer 6.2 und 6.3 jeweils mindestens 2X beträgt bevor die gesprühte Flüssigkeit auf den Boden oder zu behandelnde Pflanzen trifft. Infolge dieser Maßnahme ist gewährleistet, dass bei Betrieb ausschließlich erster Düsen 2 mit ersten Ventilen 4 oder ausschließlich zweiter Düsen 3 mit zweiten Ventilen 5 eine zumindest annährend flächendeckende Bearbeitung entsteht. Des Weiteren ist so sichergestellt, dass die aneinander grenzenden Sprühfächer 6.2 der ersten Düsen 2 überdeckt werden durch die aneinander grenzenden Sprühfächer 6.3 der zweiten Düsen 3, wie Fig. 5 zeigt. Dank dieser Überdeckung ist Variante B folglich dazu eingerichtet die gleichen vorteilhaften Variationsmöglichkeiten zur Steuerung der Ausbringmenge wie Variante A aufzuweisen. Der Unterschied zwischen Variante A und Variante B besteht darin, dass die Addition der einzelnen Durchflussmengen pro Ventil 4, 5 sich bei Variante B aus der anordnungs- und ausführungsbedingten Überdeckung der Sprühfächer 6.2, 6.3 ergibt.

Eine Umsetzung einer Verteilmaschine nach Variante B weist in vorteilhafter Weise bei Wahl eines entsprechend großen X eine verringerte Anzahl von Düsen gegenüber einer Umsetzung nach Variante A auf. Eine Umsetzung nach Variante A zeichnet sich hingegen durch eine besonders gleichmäßige Ausbringung aus.

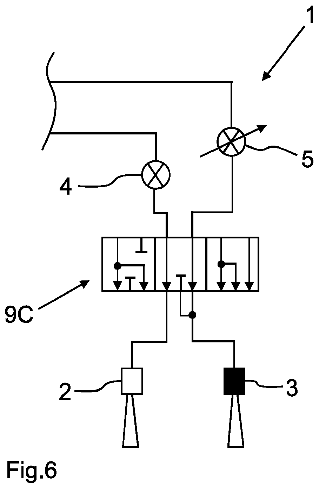

Die Fig.6 zeigt ein Fließschema einer weiteren Variante C der Düsenanordnung 1. Charakteristisch für diese Variante C ist, dass die zweite Düse 3 mit dem ersten Ventil 4 verbindbar ist. Hierzu ist ein Wegeventil 9 vorgesehen. Das Wegeventil 9C wird ebenfalls über die nicht dargestellten Mittel zur Steuerung der Ventile 4, 5 geschaltet und weist drei unterschiedliche Schaltstellungen auf. In der Mittelstellung des Wegeventils 9C ist die erste Düse 2 mit dem ersten Ventil 4 und die zweite Düse 3 mit dem zweiten Ventil 5 verbunden, wie bereits aus Variante A und B bekannt. In der linken Schaltstellung des Wegeventils 9C ist das erste Ventil 4 mit der ersten Düse 2 und der zweiten Düse 3 verbunden. Dies führt dazu, dass beide Düsen 2, 3 zur Ausbringung der Grundmenge genutzt werden. In der rechten Schaltstellung des Wegeventils 9C ist das erste Ventil 4 mit der ersten Düse 2 und der zweiten Düse 3 verbunden und das zweite Ventil 5 ist ebenfalls mit der zweiten Düse 3 verbunden. Dies führt dazu, dass sich die Ausbringmenge der zweiten Düse 3 anteilig aus dem Durchfluss der beiden Ventile 4, 5 ergibt, während der restliche Anteil des Durchflusses durch das erste Ventil 4 von der ersten Düse 2 ausgetragen wird. Je nach Anordnung der Düsen 2, 3 am Verteilergestänge (bspw. nach Variante A/Variante B) und Schaltstellung des Wegeventils 9C ergeben sich dadurch verschiedene Vorteile.

Die Kombination der bloßen Anordnung der Düsen 2, 3 aus Variante A (zumindest annährend unmittelbar aneinandergrenzende Düsen 2, 3 in einem Düsenkörper 7, Fig.3) oder der Anordnung und Beschaffenheit der Düsen 2, 3 aus Variante B (beabstandet nebeneinander angeordnete Düsen 2, 3, Fig.5) mit der linken Schaltstellung des Wegeventils 9C aus Variante C (Ventil 4 mit beiden Düsen 2, 3 verbunden) führt beispielsweise zu einer Vergleichmäßigung des Austrages der Grundmenge. Dies ergibt sich daraus, dass sich die Grundmenge auf eine größere Anzahl von Düsen 2, 3 verteilt.

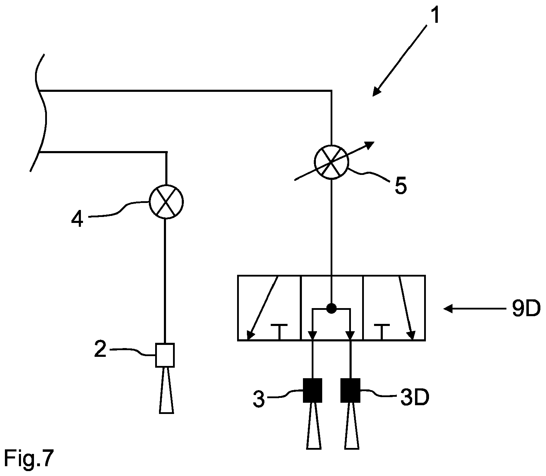

In Fig. 7 ist ein Fließschema einer Variante D der Düsenanordnung 1 zu sehen. Kennzeichnend für die Variante D ist, dass die Düsenanordnung 1 zumindest eine weitere Düse 3D umfasst, und dass die erste Düse 2 mit dem ersten Ventil 4 und die zweite Düse 3 und/oder zumindest eine weitere Düse 3D mit dem zweiten Ventil 5 verbindbar ist. Hierzu ist ein Wegeventil 9 vorgesehen. Das Wegeventil 9D verfügt über drei Schaltstellungen: entweder ist in der linken Schaltstellung des Wegeventils 9D nur Düse 3 mit Ventil 5 verbunden, oder in der rechten Schaltstellung des Wegeventils 9D ist nur Düse 3D mit Ventil 5 verbunden, oder beide Düsen 3, 3D sind mit Ventil 5 verbunden in der Mittelstellung des Wegeventils 9D. Diese Variante D ermöglicht es dem Benutzer zwischen den Düsen 3 und 3D zu wechseln. Dies erweist sich beispielsweise als zweckmäßig wenn die Düse 3D abweichende Eigenschaften gegenüber der Düse 3 aufweist. Alternativ kann der Benutzer die beiden Düsen 3, 3D gleichzeitig betreiben, was wiederum aus bereits genannten Gründen zu einer Vergleichmäßigung des Austrages führt. In diesem Fall wird die variabel und nahezu kontinuierlich steuerbare Ausbringmenge gleichmäßiger ausgetragen.

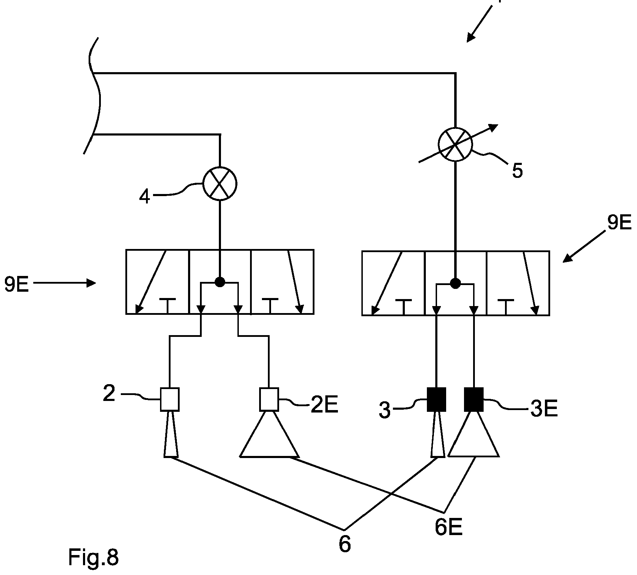

Die Fig.8 zeigt ein Fließschema einer Variante E der Düsenanordnung 1. Die Variante E bildet eine Weiterbildung von Variante D und zeichnet sich dadurch aus, dass zumindest eine weitere Düse 2E mit dem ersten Ventil 4 verbindbar ist, dass die Düsen 2 und 2E bzw. 3 und 3E unterschiedliche Größen haben. Die unterschiedlichen Größen der verschiedenen Düsen 2, 2E, 3, 3E sind in Fig. 8 angedeutet durch die unterschiedlichen Sprühfächer 6 und 6E. Zur Umsetzung dieser Variante E ist ein weiteres Wegeventil 9 vorgesehen. Die beiden Wegeventile 9E, wie in Fig. 8 gezeigt, weisen dieselben Funktionen und Schaltstellungen auf wie das Wegeventil 9D. Die Variante E bildet somit eine zweckmäßige Erweiterung der Variante D indem die Funktion des Wegventils 9D für beide Zweige der Düsenanordnung 1 zur Verfügung steht. Nicht nur für den Zweig mit dem Ventil 5 kann der Benutzer zwischen den Düsen 3 und 3E wechseln oder beide gleichzeitig betreiben sondern auch für die mit dem Ventil 4 verbundenen Düsen 2 und 2E. In vorteilhafter Weise kann der Benutzer so die Ausbringcharakteristik der Verteilmaschine individuell anpassen.

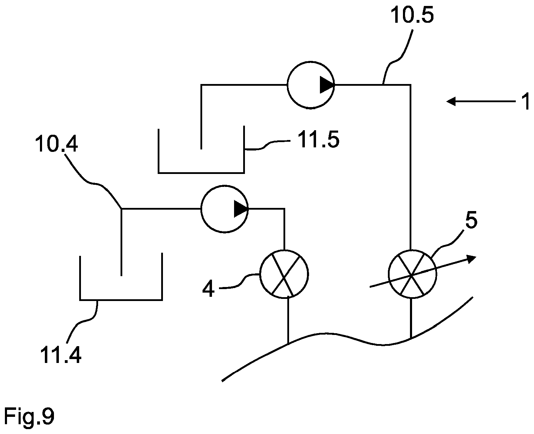

Eine Variante F der Düsenanordnung 1 ist in Fig.9 gezeigt. Die Variante F bildet eine Weiterbildung aller zuvor beschriebenen Varianten A-E und ist gekennzeichnet dadurch, dass dem ersten Ventil 4 und dem zweiten Ventil 5 separate Spritzleitungen 10.4, 10.5 zugeordnet sind. Diese vorteilhafte Weiterbildung ermöglicht, dass das Ventil 4 mittels der Spritzleitung 10.4 mit einem Tank 11.4 verbunden ist, während das Ventil 5 mittels der Spritzleitung 10.5 mit einem anderen Tank 11.5 verbunden ist. Sind die Tanks 11.4, 11.5 mit unterschiedlichen Spritzflüssigkeiten gefüllt, ist die Düsenanordnung 1 durch die Variante F in einfacher Weise dazu eingerichtet zwei verschiedene Spritzflüssigkeiten separat voneinander auszubringen. Es ist beispielsweise ein Anwendungsfall denkbar, in dem aus dem Tank 11.4 mittels dem Ventil 4 und den dem Ventil 4 zugeordneten Düsen 2 nach einer der Varianten A-E ein Grundspritzmittel ausgetragen wird, während aus dem Tankt 11.5 mittels dem Ventil 5 und den dem Ventil 5 zugeordneten Düsen 3 nach einer der Varianten A-E ein Ergänzungsspritzmittel in variabler Menge ausgetragen wird. Weiter lässt sich durch die Kombination von Variante C mit dem Wegeventil 9C in der rechten Schaltstellung und der Variante F eine sogenannte Direkteinspeisung umsetzen. Bei der Direkteinspeisung wird das Grundschutzmittel aus allen Düsen 2, 3 ausgetragen und nach Bedarf mit einem Ergänzungsspritzmittel versetzt.

Zusammenfassend stellen die folgenden Varianten Alternativen zueinander dar
- Variante A zu Variante B,
- Variante C zu Variante D und E,
so dass die folgenden Kombinationen von Varianten möglich sind:
- Variante A mit Variante C,
- Variante A mit Variante C und Variante F,
- Variante A mit Variante D oder E,
- Variante A mit Variante F und Variante D oder E,
- Variante B mit Variante C,
- Variante B mit Variante C und Variante F
- Variante B mit Variante D oder E
- Variante B mit Variante F und Variante D oder E.

Die so gebildeten Kombinationen weisen die zuvor stellenweise beschriebenen Vorteile auf, wobei alle Ausführungsformen die grundsätzliche Funktionsweise der in Fig.1 beschriebenen Vorrichtung aufweisen und somit eine vorteilhafte Weiterbildung gegenüber dem Stand der Technik bilden.

### Bezugszeichenliste

- 1: Düsenanordnung
- 2, 2E: erste Düse
- 3, 3D, 3E: zweite Düse
- 4: erstes Ventil
- 5: zweites Ventil
- 6, 6.2, 6.3, 6E: Sprühfächer
- 7: Düsenkörper
- 8: Verteilergestängehälfte
- X: Abstand
- 9, 9C, 9D, 9E: Wegeventil
- 10.4, 10.5: Spritzleitung
- 11.4,11.5: Tank

## Patentansprüche

1. Landwirtschaftliche Verteilmaschine mit einem Verteilergestänge, wobei das Verteilergestänge zumindest eine Düsenanordnung (1), welche mit zumindest einem ersten und einem zweiten Ventil (4, 5) verbunden ist, umfasst, wobei zumindest ein Ventil auf die Durchflussmenge bezogen proportional betreibbar ist, wobei die Düsenanordnung (1) zumindest eine erste und eine zweite Düse (2, 3) umfasst, wobei zumindest ein Ventil ausschließlich kontinuierlich öffnend bzw. schließend auf die Durchflussmenge bezogen nicht proportional betreibbar ist, dass die erste Düse (2) mit dem ersten Ventil (4) und die zweite Düse (3) mit dem zweiten Ventil (5) verbindbar ist, wobei die erste und zweite Düse (2, 3) der Düsenanordnung (1) räumlich zumindest annährend unmittelbar aneinandergrenzend in einem einzigen Düsenkörper (7) am Verteilergestänge angeordnet sind, **dadurch gekennzeichnet, dass** die zweite Düse (3) mittels eines Wegeventils (9) mit dem ersten Ventil (4) verbunden ist.

2. Landwirtschaftliche Verteilmaschine nach Anspruch 1, **dadurch gekennzeichnet, dass** die Düsenanordnung (1) zumindest eine weitere Düse umfasst, dass die erste Düse (2) mit dem ersten Ventil (4) und die zweite und/oder zumindest eine weitere Düse (3, 3E) mit dem zweiten Ventil (5) verbindbar ist.

3. Landwirtschaftliche Verteilmaschine nach Anspruch 2, **dadurch gekennzeichnet, dass** zumindest eine weitere Düse mit dem ersten Ventil (4) verbindbar ist, dass die Düsen unterschiedliche Größen haben.

4. Landwirtschaftliche Verteilmaschine nach zumindest einem der vorstehenden Ansprüche, **dadurch gekennzeichnet, dass** dem ersten und dem zweiten Ventil (4, 5) separate Spritzleitungen (10.4, 10.5) zugeordnet sind.

## Claims

1. Agricultural distributor comprising a distributor linkage, wherein the distributor linkage comprises at least one nozzle arrangement (1) which is connected to at least one first and one second valve (4, 5); wherein at least one valve is operable proportionally with respect to the flow rate; wherein the nozzle arrangement (1) comprises at least one first and one second nozzle (2, 3); wherein at least one valve is operable exclusively continuously opening or closing in a manner not proportional to the flow rate; that the first nozzle (2) can be connected to the first valve (4) and the second nozzle (3) can be connected to the second valve (5); wherein the first and second nozzle (2, 3) of the nozzle arrangement (1) are arranged spatially at least approximately directly adjacent to one another in a single nozzle body (7) at the distributor linkage, **characterized in that** the second nozzle (3) is connected to the first valve (4) by means of a directional control valve (9).

2. Agricultural distributor according to claim 1, **characterized in that** the nozzle arrangement (1) comprises at least one further nozzle; and **in that** the first nozzle (2) can be connected to the first valve (4), and the second and/or at least one further nozzle (3, 3E) can be connected to the second valve (5).

3. Agricultural distributor according to claim 2, **characterized in that** at least one further nozzle can be connected to the first valve (4); **in that** the nozzles have different sizes.

4. Agricultural distributor according to at least one of the preceding claims, **characterized in that** separate injection lines (10.4, 10.5) are associated with the first and second valves (4, 5).

## Revendications

1. Machine de distribution agricole comportant une tige de distribution, dans laquelle la tige de distribution comprend au moins un agencement de buses (1) relié à au moins une première et une seconde soupape (4, 5), au moins une soupape pouvant être actionnée proportionnellement par rapport au débit, l'agencement de buses (1) comprenant au moins une première et une seconde buse (2, 3), au moins une soupape s'ouvrant ou se fermant exclusivement en continu ne pouvant pas être actionnée proportionnellement par rapport au débit, en ce que la première buse (2) peut être reliée à la première soupape (4) et la seconde buse (3) peut être reliée à la seconde soupape (5), les première et seconde buses (2, 3) de l'agencement de buses (1) étant disposées dans un seul corps de buse (7) sur la tige de distribution au moins approximativement directement adjacentes l'une à l'autre spatialement, **caractérisée en ce que** la seconde buse (3) est reliée à la première soupape (4) au moyen d'une soupape de distribution (9).

2. Machine de distribution agricole selon la revendication 1,
**caractérisée en ce que** l'agencement de buses (1) comprend au moins une buse supplémentaire, **en ce que** la première buse (2) peut être reliée à la première soupape (4) et la seconde buse et/ou au moins une buse supplémentaire (3, 3E) peuvent être reliées à la seconde soupape (5).

3. Machine de distribution agricole selon la revendication 2,
**caractérisée en ce qu'au** moins une buse supplémentaire peut être reliée à la première soupape (4), **en ce que** les buses présentent des tailles différentes.

4. Machine de distribution agricole selon au moins l'une des revendications précédentes, **caractérisée en ce que** des conduites de pulvérisation séparées (10.4, 10.5) sont associées aux première et seconde soupapes (4, 5).
